# EUROPÄISCHE PATENTSCHRIFT

(11) **EP 3 693 195 B1**
(45) Veröffentlichungstag und Bekanntmachung des Hinweises auf die Patenterteilung: **23.08.2023**
(21) Anmeldenummer: 20154809.6
(22) Anmeldetag: 31.01.2020
(51) Int. Cl.: B60G 9/00, B60B 35/12, B60G 11/46, B60K 1/00, B60K 7/00

(54) **KRAFTFAHRZEUGKONSTRUKTION MIT ANTRIEBSEINHEIT IN DREHACHSE EINER ANTRIEBSACHSEN-LAGERUNG**
MOTOR VEHICLE STRUCTURE WITH DRIVE UNIT IN THE AXIS OF ROTATION OF A DRIVE AXIS BEARING
STRUCTURE DE VÉHICULE AUTOMOBILE POURVUE D'UNITÉ D'ENTRAÎNEMENT DANS L'AXE ROTATIF D'UN SUPPORT DE L'AXE D'ENTRAÎNEMENT

(30) Priorität: 08.02.2019 DE 102019103185
(43) Veröffentlichungstag der Anmeldung: 12.08.2020
(73) Patentinhaber: MAN Truck & Bus SE, 80995 München (DE)
(72) Erfinder: Kondic, Darko, 85757 Karlsfeld (DE); Burger, Norbert, 84030 Ergolding (DE); Kusch, Willi, 88239 Wangen im Allgäu (DE)
(74) Vertreter: v. Bezold & Partner Patentanwälte - PartG mbB

(56) Entgegenhaltungen:
- EP-A2- 0 004 429
- WO-A1-2017/172788
- WO-A1-2019/161395
- WO-A1-2019/200272
- DE-A1- 2 605 722
- DE-A1-102017 212 546
- DE-A1-102019 114 828
- DE-C- 206 858
- US-A- 1 178 144

## Beschreibung

### Beschreibung

Die Erfindung betrifft eine Kraftfahrzeugkonstruktion mit vorzugsweise einem zwei Längsträger umfassenden Chassis, einer Antriebsachse, zumindest einer Antriebseinheit, die ein Antriebsgetriebe und/oder einen Antriebsmotor zum Antreiben der Antriebsachse aufweist, und zumindest einer Lagerungsstruktur zur Lagerung der Antriebsachse.

Zum allgemeinen Stand der Technik kann zunächst die DE 10 2013 021 216 A1 genannt werden, aus der ein Kraftfahrzeug bekannt ist mit einer Antriebseinheit, die über eine Kardanwelle mit einer Antriebsachse verbunden ist, um die Antriebsachse anzutreiben. Technologisch bedingt muss die Kardanwelle eine Mindestlänge aufweisen, um einsatzbedingte Relativbewegungen des Kraftfahrzeugs ausgleichen zu können, so dass der Einsatz der Kardanwelle relativ viel Bauraum beansprucht. Eine gattungsgemäße Kraftfahrzeugkonstruktion ist in DE 206 858 C offenbart.

Eine Aufgabe der Erfindung ist es, eine Kraftfahrzeugkonstruktion zu schaffen, bei der die Antriebseinheit relativ nahe an die Antriebsachse positioniert werden kann, z. B. um eine möglichst kompakte Anordnung zu ermöglichen.

Diese Aufgabe kann mit den Merkmalen des Hauptanspruchs gelöst werden. Vorteilhafte Weiterbildungen der Erfindung sind in den Unteransprüchen und der folgenden Beschreibung bevorzugter Ausführungsformen offenbart.

Die Erfindung betrifft eine Kraftfahrzeugkonstruktion, mit vorzugsweise einem Chassis (z. B. einem Fahrgestell), einer Antriebsachse, die z. B. eine drehbare Antriebswelle und/oder ein Achsgehäuse aufweisen kann, und zumindest einer Antriebseinheit, die ein Antriebsgetriebe und/oder einen Antriebsmotor zum Antreiben der Antriebsachse aufweist. Des Weiteren umfasst die Kraftfahrzeugkonstruktion zumindest eine Lagerungsstruktur, die zur Lagerung der Antriebsachse dient und um eine Drehachse drehbar gelagert ist.

Die Antriebseinheit ist ebenfalls um die Drehachse drehbar gelagert.

Die Drehachse kann somit eine im Wesentlichen gemeinsame Drehachse für die Lagerungsstruktur und für die Antriebseinheit bilden.

Es ist möglich, dass die Antriebseinheit mit der Antriebsachse vorzugsweise im Wesentlichen starr verbunden ist, insbesondere um bei Bewegungen der Antriebsachse in Höhenrichtung der Kraftfahrzeugkonstruktion in eine Drehbewegung um die Drehachse gezwungen zu werden.

Auch die Lagerungsstruktur kann z. B. im Wesentlichen starr mit der Antriebsachse verbunden sein, insbesondere um bei Bewegungen der Antriebsachse in Höhenrichtung der Kraftfahrzeugkonstruktion in eine Drehbewegung um die Drehachse gezwungen zu werden. Dadurch, dass die Antriebseinheit und die Lagerungsstruktur im Wesentlichen um die gleiche

Drehachse gedreht werden, kann z. B. ermöglicht werden, dass bei Bewegungen der Antriebsachse in Höhenrichtung der Kraftfahrzeugkonstruktion die Antriebseinheit und die Lagerungsstruktur eine im Wesentlichen gemeinsame (insbesondere im Wesentlichen gleiche und/oder synchrone) Drehbewegung ausführen. Alternativ oder ergänzend kann z. B. ermöglicht werden, dass bei Bewegungen der Antriebsachse in Höhenrichtung der Kraftfahrzeugkonstruktion eine Relativbewegung zwischen der Antriebseinheit und der Antriebsachse im Wesentlichen vermieden wird, insbesondere weil die Antriebseinheit durch die Antriebsachse in eine Drehbewegung gezwungen werden kann.

Die Antriebseinheit kann z. B. Gelenkwellen-frei, insbesondere Kardangelenkwellen-frei, und/oder Kreuzgelenk-frei mit der Antriebsachse verbunden sein, um die Antriebsachse anzutreiben, insbesondere deren Antriebswelle.

Erfindungsgemäß ist die Lagerungsstruktur um eine erste Drehlagerung drehbar gelagert und die Antriebseinheit um eine zweite Drehlagerung drehbar gelagert. Die erste Drehlagerung und/oder die zweite Drehlagerung können insbesondere die Drehachse definieren. Die Antriebsachse kann z. B. ein nicht drehbares Achsgehäuse umfassen und/oder ein mit der Antriebseinheit verbundenes Achsdifferential.

Es ist möglich, dass die Antriebseinheit z. B. über eine Verbindungskonstruktion (insbesondere Flansch-Verbindungskonstruktion) an die Antriebsachse gekoppelt ist, wobei die Verbindungskonstruktion in deren Achsrichtung zum Antreiben der Antriebsachse drehbar ist, und/oder zusammen mit der Antriebseinheit um die Drehachse drehbar ist. Die Verbindungskonstruktion kann z. B. einen Antriebseinheit-seitigen Flansch und einen Antriebsachse-seitigen Flansch umfassen.

Es ist möglich, dass die erste Drehlagerung in Querrichtung der Kraftfahrzeugkonstruktion außerhalb der zwei Längsträger angeordnet ist, und/oder die zweite Drehlagerung in Querrichtung der Kraftfahrzeugkonstruktion innerhalb der zwei Längsträger angeordnet ist.

Die Lagerungsstruktur kann z. B. im Wesentlichen als Tragarmstruktur ausgebildet sein. Die Tragarmstruktur kann zweckmäßig auf unterschiedlichen Höhen angeordnete Armabschnitte aufweisen.

Alternativ oder ergänzend kann die Lagerungsstruktur z. B. selbst eine Federwirkung insbesondere in Höhenrichtung der Kraftfahrzeugkonstruktion aufweisen und z. B. als eine Art Blattfeder etc. ausgeführt sein.

Die Lagerungsstruktur kann z. B. beidseits von der Antriebsachse abstehen.

Die Lagerungsstruktur kann z. B. an eine Feder-und/oder Dämpfereinrichtung gekoppelt sein, vorzugsweise eine Luftfedereinrichtung, z. B. eine Luftfeder mit zumindest einem Balg. Hierfür kann die Lagerungsstruktur eine entsprechende Haltestelle aufweisen, vorzugsweise am entgegengesetzten Ende der ersten Drehlagerung.

Die Lagerungsstruktur kann z. B. zwischen der Feder-und/oder Dämpfereinrichtung und der ersten Drehlagerung eine Lagerstelle zur Lagerung der Antriebsachse aufweisen.

Die Antriebseinheit, optional mit integriertem Antriebsgetriebe, weist einen Schwerpunkt auf und der Schwerpunkt fällt im Wesentlichen mit der Drehachse zusammen.

Der Antriebsmotor ist vorzugsweise ein Elektromotor, z. B. zum Antreiben des Kraftfahrzeugs.

Die Lagerungsstruktur kann zweckmäßig über ihre Längserstreckung z. B. unterschiedliche Querschnittsdicken aufweisen. Die unterschiedlichen Querschnittsdicken können sich zweckmäßig zu einer Seite oder zu beiden Seiten der Lagerungsstruktur z. B. verkleinern.

Zu erwähnen ist, dass das Chassis z. B. Längs- und/oder Querträger aufweisen kann. Die Längs- und/oder Querträger können z. B. als I- oder U-Profile ausgebildet sein. Das Chassis kann aber auch z. B. als Gitterrohrrahmen ausgebildet sein. Auch ein Monocoque-Chassis oder ein herkömmliches leiterrahmenförmiges Chassis sind möglich.

Zu erwähnen ist außerdem, dass die Drehachse vorzugsweise eine im Wesentlichen horizontale Drehachse sein kann.

Im Kontext der Erfindung umfasst das Merkmal "Drehachse" insbesondere Ausführungsformen mit gleicher oder zumindest im Wesentlichen gleicher "Drehachse", so dass im Kontext der Erfindung z. B. Toleranz- oder Spiel-bedingte Achsabweichungen als ebenso umfasst gelten.

Die Antriebsachse dient vorzugsweise zum Antreiben eines oder mehrerer Räder. Bevorzugt ist, dass eine Antriebseinheit zum Antreiben zumindest zweier Räder dient, z. B. einem linken Rad und einem rechten Rad. Es ist aber auch möglich, dass z. B. eine erste Antriebseinheit zum Antreiben eines linken Rads und eine zweite Antriebseinheit zum Antreiben eines rechten Rads dient. Die Antriebswelle kann somit ein- oder zweiteilige Ausführungsformen umfassen.

Die Erfindung betrifft auch ein Kraftfahrzeug, vorzugsweise ein Nutzfahrzeug, z. B. ein Lastkraftwagen oder Omnibus, mit einer Kraftfahrzeugkonstruktion wie hierin offenbart.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
Figur 1 zeigt eine Seitenansicht einer Kraftfahrzeugkonstruktion gemäß einer Ausführungsform der Erfindung, und
Figur 2 zeigt eine schematische Draufsicht auf die Kraftfahrzeugkonstruktion der Figur 1.

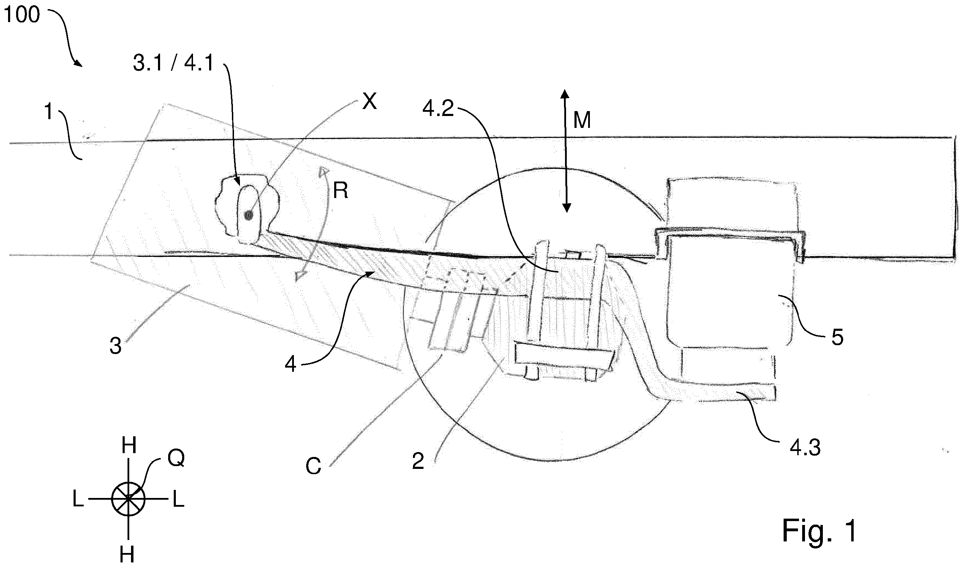

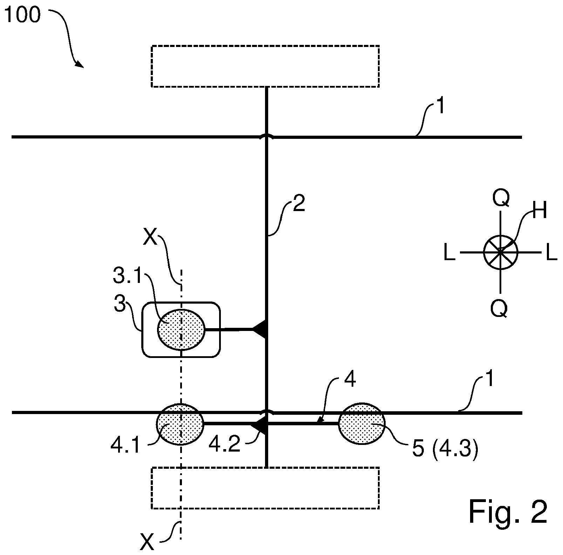

Figur 1 zeigt eine Seitenansicht einer Kraftfahrzeugkonstruktion 100 gemäß einer Ausführungsform der Erfindung, wobei Figur 2 eine schematische Draufsicht auf die Kraftfahrzeugkonstruktion 100 zeigt. Die Kraftfahrzeugkonstruktion 100 wird nachfolgend unter gemeinsamer Bezugnahme auf die Figuren 1 und 2 beschrieben.

Die Kraftfahrzeugkonstruktion 100 umfasst ein zwei Längsträger 1 aufweisendes Chassis (Fahrgestell), eine Antriebsachse 2, die zumindest eine nicht gezeigte drehbare Antriebswelle aufweist, zumindest eine Antriebseinheit 3, die einen Antriebsmotor (z. B. Elektromotor) zum Antreiben der Antriebsachse 2 (Antriebswelle) aufweist, und zumindest eine als Tragarmstruktur ausgebildete Lagerungsstruktur 4, die um eine Drehachse X drehbar gelagert ist und zur Lagerung der Antriebsachse 2 dient.

Die Antriebsachse 2 kann z. B. ein nicht drehbares Achsgehäuse umfassen und ein mit der Antriebseinheit 3 verbundenes Achsdifferential. In die Antriebseinheit 3 kann optional ein Antriebsgetriebe integriert sein.

Eine Besonderheit der Kraftfahrzeugkonstruktion 100 ist, dass die Antriebseinheit 3 ebenfalls um die im wesentlichen gleiche Drehachse X drehbar gelagert ist, so dass vorzugsweise die Drehachse X eine zumindest nahezu gemeinsame Drehachse für die Lagerungsstruktur 4 und für die Antriebseinheit 3 bilden kann.

Die Antriebseinheit 3 steht mit der Antriebsachse 2 in Verbindung, um bei einsatzbedingten Bewegungen M der Antriebsachse 2 in Höhenrichtung H der Kraftfahrzeugkonstruktion 100 in eine Drehbewegung R um die Drehachse X gezwungen zu werden.

Dadurch, dass die Antriebseinheit 3 und die Lagerungsstruktur 4 zweckmäßig im Wesentlichen gemeinsam um die im Wesentlichen gemeinsame Drehachse X drehbar sind, kann z. B. ermöglicht werden, dass bei Bewegungen M der Antriebsachse 2 in Höhenrichtung H der Kraftfahrzeugkonstruktion 100 die Antriebseinheit 3 und die Lagerungsstruktur 4 eine im Wesentlichen gemeinsame Drehbewegung R ausführen. Alternativ oder ergänzend kann dadurch z. B. ermöglicht werden, dass bei Bewegungen M der Antriebsachse 2 in Höhenrichtung H der Kraftfahrzeugkonstruktion 100 eine Relativbewegung zwischen der Antriebseinheit 3 und der Antriebsachse 2 zumindest im Wesentlichen vermieden wird.

Die Lagerungsstruktur 4 umfasst eine die Drehachse X definierende (erste) Drehlagerung 4.1. Die Lagerungsstruktur 4 kann z. B. selbst eine Federwirkung zweckmäßig in Höhenrichtung H der Fahrzeugkonstruktion 100 aufweisen und z. B. über ihre Längserstreckung unterschiedliche Querschnittsdicken aufweisen. Außerdem kann die Lagerungsstruktur 4 eine Lagerstelle 4.2 zur Lagerung der Antriebsachse 2 aufweisen. Des Weiteren kann die Lagerungsstruktur 4 eine Haltestelle 4.3 für eine Feder-und/oder Dämpfereinrichtung 5 aufweisen.

Bevorzugt ist, wenn die Drehlagerung 4.1 an einem Ende der Lagerungsstruktur 4 angeordnet ist, die Haltestelle 4.3 (Feder-und/oder Dämpfereinrichtung 5) am anderen Ende der Lagerungsstruktur 4 angeordnet ist und die Lagerstelle 4.2 zwischen der Drehlagerung 4.1 und der Haltestelle 4.3 (Feder-und/oder Dämpfereinrichtung 5) angeordnet ist.

Die Antriebseinheit 3 ist um eine die Drehachse X definierende (zweite) Drehlagerung 3.1 gelagert.

Die Drehlagerung 4.1 ist zweckmäßig in Querrichtung Q der Kraftfahrzeugkonstruktion 100 außerhalb der zwei Längsträger 1 angeordnet, wobei die Drehlagerung 3.1 in Querrichtung Q der Kraftfahrzeugkonstruktion 100 innerhalb der zwei Längsträger 1 angeordnet ist.

Die Antriebseinheit 3 kann z. B. über eine Gelenkwellen-freie (insbesondere Kardangelenkwellen-freie, und/oder Kreuzgelenk-freie) Flansch-Verbindungskonstruktion C an die Antriebsachse 2 gekoppelt sein, wobei die Verbindungskonstruktion C in deren Achsrichtung zum Antreiben der Antriebsachse 2 (Antriebswelle) drehbar ist, und zusammen mit der Antriebseinheit 3 ebenfalls um die Drehachse X drehbar ist.

Die Erfindung ist nicht auf die oben beschriebenen bevorzugten Ausführungsformen beschränkt. Vielmehr ist eine Vielzahl von Varianten und Abwandlungen möglich, wie in den beiliegenden Ansprüche definiert.

### Bezugszeichenliste

- 1: Längsträger
- 2: Antriebsachse, vorzugsweise mit drehbarer Antriebswelle und/oder Achsgehäuse
- 3: Antriebseinheit, vorzugsweise mit Antriebsmotor und/oder Antriebsgetriebe
- 3.1: (zweite) Drehlagerung
- 4: Lagerungsstruktur
- 4.1: (erste) Drehlagerung
- 4.2: Lagerstelle, insbesondere für Antriebsachse
- 4.3: Haltestelle, insbesondere für Feder- und/oder Dämpfereinrichtung
- 5: Feder- und/oder Dämpfereinrichtung
- X: Drehachse
- M: einsatzbedingte Bewegungen der Antriebsachse
- R: einsatzbedingte Drehbewegung
- L: Längsrichtung der Kraftfahrzeugkonstruktion
- H: Höhenrichtung der Kraftfahrzeugkonstruktion
- Q: Querrichtung der Kraftfahrzeugkonstruktion
- 100: Kraftfahrzeugkonstruktion

## Patentansprüche

1. Kraftfahrzeugkonstruktion (100), mit
- vorzugsweise einem zwei Längsträger (1) umfassenden Chassis,
- einer Antriebsachse (2),
- zumindest einer Antriebseinheit (3), die ein Antriebsgetriebe und/oder einen Antriebsmotor zum Antreiben der Antriebsachse (2) aufweist, und
- zumindest einer Lagerungsstruktur (4), die um eine Drehachse (X) drehbar gelagert ist und zur Lagerung der Antriebsachse (2) dient,
wobei:
die Antriebseinheit (3) um die Drehachse (X) drehbar gelagert ist,
die Antriebseinheit (3) einen Schwerpunkt aufweist und der Schwerpunkt im Wesentlichen mit der Drehachse (X) zusammenfällt, und
die Lagerungsstruktur (4) um eine erste Drehlagerung (4.1) drehbar gelagert ist,
**dadurch gekennzeichnet, dass** die Antriebseinheit (3) um eine zweite Drehlagerung (3.1) drehbar gelagert ist.

2. Kraftfahrzeugkonstruktion (100) nach Anspruch 1, **dadurch gekennzeichnet, dass**
- die Antriebseinheit (3) mit der Antriebsachse (2) verbunden ist, um bei Bewegungen (M) der Antriebsachse (2) in Höhenrichtung (H) der Kraftfahrzeugkonstruktion (100) in eine Drehbewegung (R) um die Drehachse (X) gezwungen zu werden, und/oder
- die Lagerungsstruktur (4) mit der Antriebsachse (2) verbunden ist, um bei Bewegungen (M) der Antriebsachse (2) in Höhenrichtung (H) der Kraftfahrzeugkonstruktion (100) in eine Drehbewegung (R) um die Drehachse (X) gezwungen zu werden.

3. Kraftfahrzeugkonstruktion (100) nach Anspruch 1 oder 2, **dadurch gekennzeichnet, dass** die Antriebseinheit (3) und die Lagerungsstruktur (4) um die Drehachse (X) drehbar sind, um bei Bewegungen (M) der Antriebsachse (2) in Höhenrichtung (H) der Kraftfahrzeugkonstruktion (100) eine im Wesentlichen gemeinsame Drehbewegung (R) auszuführen und/oder um bei Bewegungen (M) der Antriebsachse (2) in Höhenrichtung (H) der Kraftfahrzeugkonstruktion (100) einer Relativbewegung zwischen der Antriebseinheit (3) und der Antriebsachse (2) im Wesentlichen zu vermeiden.

4. Kraftfahrzeugkonstruktion (100) nach einem der vorhergehenden Ansprüche, **dadurch gekennzeichnet, dass** die Antriebseinheit (3) Gelenkwellen-frei, insbesondere Kardangelenkwellen-frei, und/oder Kreuzgelenk-frei mit einer Antriebswelle der Antriebsachse (2) verbunden ist, um die Antriebswelle anzutreiben.

5. Kraftfahrzeugkonstruktion (100) nach einem der vorhergehenden Ansprüche, **dadurch gekennzeichnet, dass** die Antriebsachse (2) ein mit der Antriebseinheit (3) verbundenes Achsdifferential umfasst.

6. Kraftfahrzeugkonstruktion (100) nach einem der vorhergehenden Ansprüche, **dadurch gekennzeichnet, dass** die Antriebseinheit (3) über eine Verbindungskonstruktion (C) an die Antriebsachse (2) gekoppelt ist, wobei die Verbindungskonstruktion (C) in deren Achsrichtung zum Antreiben der Antriebsachse (2) drehbar ist, und zusammen mit der Antriebseinheit (3) um die Drehachse (X) drehbar ist.

7. Kraftfahrzeugkonstruktion (100) nach einem der vorhergehenden Ansprüche, **dadurch gekennzeichnet, dass**
- die erste Drehlagerung (4.1) in Querrichtung (Q) der Kraftfahrzeugkonstruktion (100) außerhalb der zwei Längsträger (1) angeordnet ist, und/oder
- die zweite Drehlagerung (3.1) in Querrichtung (Q) der Kraftfahrzeugkonstruktion (100) innerhalb der zwei Längsträger (1) angeordnet ist.

8. Kraftfahrzeugkonstruktion (100) nach einem der vorhergehenden Ansprüche, **dadurch gekennzeichnet, dass** die Lagerungsstruktur (4) als Tragarmstruktur ausgebildet ist, selbst eine Federwirkung aufweist und/oder beidseits von der Antriebsachse (2) absteht.

9. Kraftfahrzeugkonstruktion (100) nach einem der vorhergehenden Ansprüche, **dadurch gekennzeichnet, dass** die Lagerungsstruktur (4) an eine Feder-und/oder Dämpfereinrichtung (5) gekoppelt ist, vorzugsweise eine Luftfedereinrichtung.

10. Kraftfahrzeugkonstruktion (100) nach einem der vorhergehenden Ansprüche, **dadurch gekennzeichnet, dass** die Lagerungsstruktur (4) zwischen der Feder-und/oder Dämpfereinrichtung (5) und der ersten Drehlagerung (4.1) eine Lagerstelle (4.2) zur Lagerung der Antriebsachse (2) aufweist.

11. Kraftfahrzeugkonstruktion (100) nach einem der vorhergehenden Ansprüche, **dadurch gekennzeichnet, dass** der Antriebsmotor einen Elektromotor umfasst.

12. Kraftfahrzeugkonstruktion (100) nach einem der vorhergehenden Ansprüche, **dadurch gekennzeichnet, dass** die Lagerungsstruktur (4) unterschiedliche Querschnittsdicken aufweist.

13. Kraftfahrzeugkonstruktion (100) nach einem der vorhergehenden Ansprüche, **dadurch gekennzeichnet, dass**
- die Antriebseinheit (3) mit der Antriebsachse (2) im Wesentlichen starr verbunden ist, und/oder
- die Lagerungsstruktur (4) mit der Antriebsachse (2) im Wesentlichen starr verbunden ist.

14. Kraftfahrzeug, vorzugsweise Nutzfahrzeug, mit einer Kraftfahrzeugkonstruktion (100) nach einem der vorhergehenden Ansprüche.

## Claims

1. Motor vehicle structure (100), with
- preferably a chassis comprising two longitudinal support members (1),
- a drive axle (2),
- at least one drive unit (3) comprising a drive gear and/or a drive motor for driving the drive axle (2), and
- at least one bearing structure (4), which is rotatably mounted about an axis of rotation (X) and serves for supporting the drive axle (2),
wherein:
the drive unit (3) is rotatably mounted about the axis of rotation (X),
the drive unit (3) has a gravity center and the gravity center substantially coincides with the axis of rotation (X), and
the bearing structure (4) is rotatably mounted about a first rotary bearing (4.1),
**characterized in that** the drive unit (3) is rotatably mounted about a second rotary bearing (3.1).

2. Motor vehicle structure (100) according to claim 1, **characterized in that**
- the drive unit (3) is connected to the drive axle (2) in order to be forced into a rotational movement (R) about the rotational axis (X) upon movements (M) of the drive axle (2) in the height direction (H) of the motor vehicle construction (100), and/or
- the bearing structure (4) is connected to the drive axle (2) in order to be forced into a rotational movement (R) about the rotational axis (X) upon movements (M) of the drive axle (2) in the height direction (H) of the motor vehicle structure (100).

3. Motor vehicle structure (100) according to claim 1 or 2, **characterized in that** the drive unit (3) and the bearing structure (4) are rotatable about the rotational axis (X) in order to perform a substantially common rotational movement (R) upon movements (M) of the drive axle (2) in the height direction (H) of the motor vehicle structure (100) and/or in order to substantially avoid a relative movement between the drive unit (3) and the drive axle (2) upon movements (M) of the drive axle (2) in the height direction (H) of the motor vehicle structure (100).

4. Motor vehicle structure (100) according to any one of the preceding claims, **characterized in that** the drive unit (3) is connected, hinge shaft free, in particular cardan joint shaft free, and/or hooke's joint free, to a drive shaft of the drive axle (2) in order to drive the drive shaft.

5. Motor vehicle structure (100) according to any one of the preceding claims, **characterized in that** the drive axle (2) comprises an axle differential connected to the drive unit (3).

6. Motor vehicle structure (100) according to any one of the preceding claims, **characterized in that** the drive unit (3) is coupled to the drive axle (2) via a connecting structure (C), wherein the connecting structure (C) is rotatable in the axial direction thereof for driving the drive axle (2), and is rotatable together with the drive unit (3) about the rotational axis (X).

7. Motor vehicle structure (100) according to any one of the preceding claims, **characterized in that**
- the first rotary bearing (4.1) is arranged outside the two longitudinal support members (1) in the transverse direction (Q) of the motor vehicle structure (100), and/or
- the second rotary bearing (3.1) is arranged inside the two longitudinal support members (1) in the transverse direction (Q) of the motor vehicle structure (100).

8. Motor vehicle structure (100) according to any one of the preceding claims, **characterized in that** the bearing structure (4) is configured as a support arm structure, itself comprises a spring effect and/or protrudes on both sides from the drive axle (2).

9. Motor vehicle structure (100) according to any one of the preceding claims, **characterized in that** the bearing structure (4) is coupled to a spring and/or damper device (5), preferably an air spring device.

10. Motor vehicle structure (100) according to any one of the preceding claims, **characterized in that** the bearing structure (4) has a bearing point (4.2) for mounting the drive axle (2) between the spring and/or damper device (5) and the first rotary bearing (4.1).

11. Motor vehicle structure (100) according to any one of the preceding claims, **characterized in that** the drive motor comprises an electric motor.

12. Motor vehicle structure (100) according to any one of the preceding claims, **characterized in that** the bearing structure (4) has different cross-sectional thicknesses.

13. Motor vehicle structure (100) according to any one of the preceding claims, **characterized in that**
- the drive unit (3) is substantially rigidly connected to the drive axle (2), and/or
- the bearing structure (4) is substantially rigidly connected to the drive axle (2).

14. Motor vehicle, preferably utility vehicle, comprising a motor vehicle structure (100) according to any one of the preceding claims.

## Revendications

1. Structure de véhicule automobile (100), comprenant
- de préférence un châssis comportant deux longerons (1),
- un essieu moteur (2),
- au moins une unité d'entraînement (3) qui présente une transmission d'entraînement et/ou un moteur d'entraînement servant à l'entraînement de l'essieu moteur (2), et
- au moins une structure de support (4) qui est montée rotative autour d'un axe de rotation (X) et qui sert au support de l'essieu moteur (2),
dans laquelle :
l'unité d'entraînement (3) est montée rotative autour de l'axe de rotation (X),
l'unité d'entraînement (3) présente un centre de gravité et le centre de gravité coïncide sensiblement avec l'axe de rotation (X), et
la structure de support (4) est montée rotative autour d'un premier support rotatif (4.1),
**caractérisée en ce que** l'unité d'entraînement (3) est montée rotative autour d'un deuxième support rotatif (3.1) .

2. Structure de véhicule automobile (100) selon la revendication 1, **caractérisée en ce que**
- l'unité d'entraînement (3) est reliée à l'essieu moteur (2), afin d'être forcée à effectuer un mouvement rotatif (R) autour de l'axe de rotation (X) en cas de mouvements (M) de l'essieu moteur (2) dans la direction verticale (H) de la structure de véhicule automobile (100) et/ou
- la structure de support (4) est reliée à l'essieu moteur (2) afin d'être forcée à effectuer un mouvement rotatif (R) autour de l'axe de rotation (X) en cas de mouvements (M) de l'essieu moteur (2) dans la direction verticale (H) de la structure de véhicule automobile (100) .

3. Structure de véhicule automobile (100) selon la revendication 1 ou 2, **caractérisée en ce que** l'unité d'entraînement (3) et la structure de support (4) sont rotatives autour de l'axe de rotation (X), afin d'effectuer un mouvement rotatif (R) sensiblement commun en cas de mouvements (M) de l'essieu moteur (2) dans la direction verticale (H) de la structure de véhicule automobile (100) et/ou d'empêcher sensiblement un mouvement relatif entre l'unité d'entraînement (3) et l'essieu moteur (2) en cas de mouvements (M) de l'essieu moteur (2) dans la direction verticale (H) de la structure de véhicule automobile (100).

4. Structure de véhicule automobile (100) selon l'une des revendications précédentes, **caractérisée en ce que** l'unité d'entraînement (3) est reliée à un arbre d'entraînement de l'essieu moteur (2) sans arbre articulé, en particulier sans arbre articulé à cardan et/ou sans joint de cardan, afin d'entraîner l'arbre d'entraînement.

5. Structure de véhicule automobile (100) selon l'une des revendications précédentes, **caractérisée en ce que** l'essieu moteur (2) comporte un différentiel d'essieu relié à l'unité d'entraînement (3).

6. Structure de véhicule automobile (100) selon l'une des revendications précédentes, **caractérisée en ce que** l'unité d'entraînement (3) est accouplée à l'essieu moteur (2) par le biais d'une structure de liaison (C), la structure de liaison (C) étant rotative dans sa direction axiale pour l'entraînement de l'essieu moteur (2), et étant rotative autour de l'axe de rotation (X) conjointement avec l'unité d'entraînement (3).

7. Structure de véhicule automobile (100) selon l'une des revendications précédentes, **caractérisée en ce que**
- le premier support rotatif (4.1) est disposé à l'extérieur des deux longerons (1) dans la direction transversale (Q) de la structure de véhicule automobile (100), et/ou
- le deuxième support rotatif (3.1) est disposé à l'intérieur des deux longerons (1) dans la direction transversale (Q) de la structure de véhicule automobile (100) .

8. Structure de véhicule automobile (100) selon l'une des revendications précédentes, **caractérisée en ce que** la structure de support (4) est réalisée sous forme de structure de bras porteur, présente elle-même une action de ressort et/ou dépasse des deux côtés de l'essieu moteur (2).

9. Structure de véhicule automobile (100) selon l'une des revendications précédentes, **caractérisée en ce que** la structure de support (4) est accouplée à un dispositif à ressort et/ou amortisseur (5), de préférence un dispositif de suspension pneumatique.

10. Structure de véhicule automobile (100) selon l'une des revendications précédentes, **caractérisée en ce que** la structure de support (4) présente, entre le dispositif à ressort et/ou amortisseur (5) et le premier support rotatif (4.1), un point d'appui (4.2) servant au support de l'essieu moteur (2).

11. Structure de véhicule automobile (100) selon l'une des revendications précédentes, **caractérisée en ce que** le moteur d'entraînement comporte un moteur électrique.

12. Structure de véhicule automobile (100) selon l'une des revendications précédentes, **caractérisée en ce que** la structure de support (4) présente différentes épaisseurs de section transversale.

13. Structure de véhicule automobile (100) selon l'une des revendications précédentes, **caractérisée en ce que**
- l'unité d'entraînement (3) est reliée de manière sensiblement rigide à l'essieu moteur (2), et/ou
- la structure de support (4) est reliée de manière sensiblement rigide à l'essieu moteur (2).

14. Véhicule automobile, de préférence véhicule utilitaire, comprenant une structure de véhicule automobile (100) selon l'une des revendications précédentes.
